# EUROPÄISCHE PATENTANMELDUNG

(11) **EP 1 731 672 A2**
(43) Veröffentlichungstag der Anmeldung: **13.12.2006**
(21) Anmeldenummer: 06120438.4
(22) Anmeldetag: 09.08.1999
(51) Int. Cl.: E01B 25/00

(54) **Herstellungsverfahren der lagegenauen Verbindungen von Statoren an einer Magnetschwebebahn und deren Tragkonstruktion**

(30) Priorität: 14.09.1998 DE 19841936
(62) Teilanmeldung aus: 99115677.9
(71) Anmelder: Max Bögl Bauunternehmung GmbH & Co. KG, 92369 Sengenthal (DE)
(72) Erfinder: Reichel, Dieter, 92318, Neumarkt (DE)
(74) Vertreter: Bergmeier, Werner

(57) **Zusammenfassung**

Die Erfindung betrifft einen Fahrweg für ein spurgebundenes Fahrzeug, insbesondere eine Magnetschwebebahn, mit Konsolen zur Verbindung eines Trägers mit wenigstens einem Anbauteil zum Führen des Fahrzeuges. Die Konsolen sind mit dem Träger verbunden und weisen eine im wesentlichen längs des Trägers sich erstreckende Aufnahme für die Befestigung des Anbauteiles auf, wobei jeweils zwei, beidseitig des Trägers angeordnete, einander gegenüberliegende Konsolen mit mindestens einem Zuganker zu einer Baueinheit zusammengefasst sind.

## Beschreibung

Die vorliegende Erfindung betrifft einen Fahrweg für ein spurgebundenes Fahrzeug, insbesondere eine Magnetschwebebahn, mit Konsolen zur Verbindung eines Trägers mit wenigstens einem Anbauteil zum Führen des Fahrzeugs.

Derartige Fahrwege werden meist als Hochbahnen ausgeführt. Hochbahnen weisen üblicherweise im Abstand zueinander angeordnete Träger auf, zwischen denen den Fahrweg aufnehmende Platten angeordnet sind, die von Träger zu Träger reichen. Die Träger nehmen sowohl die statischen, als auch die dynamischen Kräfte auf und müssen deshalb zunächst der Größe der aufzunehmenden Lasten entsprechenden dimensioniert werden. Da die Träger in vielen Fällen, insbesondere bei Magnetschnellbahnen zudem noch Funktionsteile derselben aufnehmen, die funktionsbedingt nur geringe Lageabweichungen zulassen, ist es zur Einhaltung dieser relativ engen Toleranzen sehr schwierig, die Träger zusammen mit den Tragelementen für die Funktionsteile in einem Zug herzustellen.

Nachdem solche Bahnen zudem für eine relativ lange Betriebsdauer erstellt werden, ist es aufgrund der Schwind- und Kriechvorgänge, sowohl im Fundament, als auch im eigentlichen Bauwerk äußerst schwer, die relativ geringen Toleranzen für die gesamte Betriebsdauer einer Bahn einzuhalten oder zu gewährleisten.

Aus der EP 0 510 153 A1 ist eine Tragkonstruktion für den Fahrweg eines spurgebundenen Fahrzeugs bekannt. Die erforderlichen Träger sind dabei je nach Ausführungsbeispiel entweder in Stahl- oder in Betonbauweise hergestellt. Ausrüstungsteile werden dabei lagegenau an dem Träger befestigt. Hierzu wird in dieser Anmeldung vorgeschlagen, dass an dem Träger Anschlusskörper angeordnet sind, die erste Anschlagflächen aufweisen. Diese ersten Anschlagflächen korrespondieren mit zweiten Anschlagflächen, die an mit dem Ausrüstungsteil verbundenen Traversen angeordnet sind. Nachdem die Ansätze mit den ersten Anschlagflächen an dem Träger befestigt wurden, werden diese ersten Anschlagflächen spanabhebend bearbeitet, so dass die geforderten Toleranzen für die Anbringung der Ausrüstungsteile beim Zusammenwirken mit der zweiten Anschlagfläche des Befestigungsmittels der Ausrüstungsteile eingehalten werden. Die Bearbeitung der Anschlagflächen soll dabei vorzugsweise in einer klimatisierten Fabrikhalle unter kontrollierten Bedingungen durchgeführt werden. Nachteilig bei dieser Verfahrensweise ist es, dass die Bearbeitung der Anschlagflächen hierdurch zwar möglicherweise richtig in Bezug auf den Träger erfolgt. Nach Aufbau des Trägers an der Baustelle sind jedoch insbesondere bei Verwendung von vorgefertigten Stahlbetonträgern weitere Toleranzen zu erwarten. Diese Toleranzen entstehen durch das Aneinanderreihen der einzelnen Stahlbetonträger. Entsteht beim Aufstellen dieser Stahlbetonträger ein vertikaler oder horizontaler Versatz, so sind auch die zuvor exakt bearbeiteten Anschlagflächen nicht mehr innerhalb der geforderten Toleranzen in Bezug auf die komplette Fahrbahn. Dieses Problem wurde bei der EP 0 410 515 A1 nicht erkannt.

Aufgabe der vorliegenden Erfindung ist es daher, eine Möglichkeit zu schaffen, um beim Bau eines entsprechenden Fahrweges die geforderten Toleranzen nicht nur in Bezug auf den Träger, sondern in Bezug auf die komplette Fahrbahn einhalten zu können. Weiterhin ist ein Fahrweg zu schaffen, welcher die genannten Nachteile nicht aufweist.

Die Aufgabe wird durch einen Fahrweg gemäß den Merkmalen des Patentanspruchs 1 gelöst.

Bei einem Herstellungsverfahren werden mehrere Träger zur Bildung des Fahrweges vor Ort im wesentlichen positionsgerecht aufgestellt. Verbindungsstellen zwischen Träger und Anbauteil werden vermessen und bei Bedarf das geforderte Maß hergestellt. Dies erfolgt dadurch, dass das Material an der Verbindungsstelle zwischen Träger und Anbauteil abgetragen oder aufgebaut wird und erst anschließend, wenn das erforderliche Maß erreicht wurde, das Anbauteil montiert wird. Hierdurch wird eine feste und stabile Verbindungsstelle geschaffen, welche maßgerecht mit für den sicheren Betrieb der Magnetschwebebahn erforderlichen geringen Toleranzen erhalten wird. Der besondere Vorteil besteht auch darin, dass die Verbindungsstelle vor Ort auf das richtige Maß gebracht wird. Es werden hierdurch die Anforderungen beim Absetzen und Aufstellen der Träger geringer gehalten. Bei Trägern, welche bei modernen Fahrwegen aus schweren Stahlbetonhohlraumträgern in Fertigbauweise hergestellt sind, ist das exakte Aufstellen schwieriger, als die exakte Herstellung der Verbindungsstelle. Darüber hinaus wird der Vorteil erreicht, dass auch an die Stöße verschiedener Träger geringere Anforderungen gestellt werden müssen, da ein gewisser Versatz der einzelnen Träger zueinander durch ein entsprechendes Korrigieren des Maßes durch Abtragen oder Aufbauen von Material an der Verbindungsstelle behoben wird. Es wird somit gewährleistet, dass nicht nur innerhalb eines Trägers die Verbindungsstellen maßgenau hergestellt sind, sondern dass darüber hinaus die maßgenaue Herstellung von den Verbindungsstellen über den gesamten Fahrweg möglich ist.

Besonders vorteilhaft ist es, wenn die Vermessung oder Bearbeitung der Verbindungsstellen mittels eines spurgebundenen Fahrzeugs durchgeführt wird. Das spurgebundene Fahrzeug wird dabei entlang des Trägers geführt und bewirkt dadurch eine lagegenaue Vermessung und Bearbeitung der Verbindungsstelle.

Besonders vorteilhaft ist es, wenn die Verbindungsstelle an einer mit dem Träger verbundenen Konsole vorgesehen wird. Die Konsole ist hierbei vorteilhaft gestaltbar, so dass sie für die Vermessung der Verbindungsstelle und die Bearbeitung dieser Verbindungsstelle besonders gut geeignet ist. Auch ist die Materialauswahl hierdurch unabhängig von den Eigenschaften, welche der Träger erfüllen muss, so zu wählen, dass die Bearbeitung und Verbindung mit dem Anbauteil optimal erfolgt.

Bei einer entsprechenden Gestaltung der Konsole kann die Verbindungsstelle für das Anbauteil an der Konsole vor und/oder nach dem Anbau an dem Träger mechanisch bearbeitet werden. Dies erlaubt beispielsweise eine erste Vorbearbeitung, ein anschließendes Anbauen der Konsole an den Träger und eine gegebenenfalls erforderliche Nachbearbeitung der Verbindungsstelle.

Üblicherweise wird das Material spanend abgetragen, das bedeutet, dass durch Fräsen oder Bohren die entsprechenden Verbindungsstellen geschaffen werden. Es kann aber auch durch Laser oder andere Verfahren das Bearbeiten der Verbindungsstelle erfolgen.

Erforderlichenfalls kann bei einer entsprechenden Materialwahl der Konsole, bzw. der Verbindungsstelle an dem Träger Material aufgeschweißt werden. Hierdurch ist ein gegebenenfalls vorhandenes Untermaß zu beheben.

Ein zusätzliches Material kann bei einem Untermaß an der Befestigungsstelle als Abstandsstück angeordnet werden. Es eignen sich hier insbesondere Scheiben oder Distanzplatten. Dieses zusätzliche Material kann beispielsweise an der Verbindungsstelle angeschweißt werden und anschließend auf das erforderliche Maß wieder abgetragen werden.

Wird die Vermessung und Bearbeitung nach Beendigung des Verformungsvorganges, insbesondere von Kriech- und Schwindvorgängen durchgeführt, so wird eine auf Dauer weitgehend anhaltende entsprechend korrekte Einhaltung des Sollmaßes mit den zulässigen Toleranzen erhalten, da sich das Material nicht mehr wesentlich verändert. Auch dies ist ein besonderer Vorteil, da gemäß dem Stand der Technik bei einer Bearbeitung der entsprechenden Verbindungsstellen unmittelbar nach der Fertigung in den Hallen besonders bei Betonarbeiten mit weiteren Verformungen zu rechnen ist. Diese Veränderungen sind erst nach mehreren Wochen weitgehend abgeklungen, so dass der zwischen Fertigung und Verbauung des Trägers üblicherweise bestehende Zeitraum für den Transport und Lagerung des Trägers vorteilhaft ist und nach der Verbauung des Trägers diese Vorgänge weitgehend beendet sind.

Die Vermessung der Verbindungsstelle geschieht ausgehend von Referenzpunkten, -linien oder -ebenen. Dies gewährleistet, dass die erforderlichen Maße richtig eingehalten werden. An den Referenzpunkten, -linien oder - ebenen orientiert sich gemäß einer Ausführung das spurgebundene Fahrzeug, um die Vermessung vorzunehmen.

Bei einem erfindungsgemäßen Fahrweg sind die Konsolen mit dem Träger verbunden und weisen eine im wesentlichen längs des Trägers sich erstreckende Aufnahme für die Befestigung des Anbauteiles auf, wobei jeweils zwei, beidseitig des Trägers angeordnete, einander gegenüberliegende Konsolen mit mindestens einem Zuganker zu einer Baueinheit zusammengefasst sind. Es wird damit ein erfindungsgemäßer Fahrweg geschaffen, welcher besonders vorteilhaft für eine Bearbeitung der Verbindungsstelle zwischen Konsole und Anbauteil bzw. zwischen Träger und Anbauteil geeignet ist. Während bei bekannten Anordnungen die Träger für den Fahrweg mit den Tragelementen für die Funktionsteile einstückig ausgebildet sind und sich daher Lageveränderungen der Träger unmittelbar auf die Lage der Tragelemente für die Funktionsteile auswirken und somit nicht mehr korrigierbar sind, geht die Erfindung vom Gedanken einer Trennung der Träger für den Fahrweg von den Tragelementen für die Funktionsteile aus. Sie sieht eine zwischen diesen anzuordnende Konsole vor, welche mit den Tragelementen für die Funktionsteile und mit dem Träger für den Fahrweg verbindbar ist.

Nachdem das Verbinden der Konsolen mit den Trägern und auch das Anbringen der Tragelemente an den Konsolen nach dem Aushärten des Betons und somit nach dem durch das Aushärten bedingten Schwinden des Betons erfolgen kann, wird die durch das Schwinden des Betons hervorgerufene Lageveränderung durch die Erfindung vermieden. Da durch die Erfindung zumindest eine Möglichkeit zur nachträglichen Korrektur der Relativlage zwischen dem jeweiligen Träger für den Fahrweg einerseits und den Tragelementen für die Funktionsteile andererseits geschaffen ist, steht für die Dimensionierung der Träger nicht mehr deren Formstabilität und Einhaltung der geforderten engen Toleranzen, sondern die statische Festigkeit des Trägerquerschnittes im Vordergrund.

Ferner werden die aus dem Fahrbetrieb und/oder durch Temperaturschwankungen entstehenden Kräfte unmittelbar in die Träger eingeleitet, ohne sich auf die Relativlage zwischen den Konsolen und den Tragelementen auszuwirken.

Die erfindungsgemäße Lösung bietet aufgrund ihres modularen Aufbaus den weiteren Vorteil, dass die Konsolen und auch die Tragelemente wahlweise vor und auch nach ihrem Anbau mechanisch bearbeitet werden können. Selbst hohe Toleranzanforderungen lassen sich hierdurch in allen Raumachsen relativ leicht erfüllen. Auch ermöglicht der modulare Aufbau neben exakter und kostengünstiger Fertigung einen einfachen Austausch von beispielsweise durch Unfälle beschädigte Tragelemente für die Funktionsteile.

Schließlich lässt sich die für die Funktionsebene geforderte Raumkurve durch entsprechende Gestaltung und/oder Bearbeitung der Konsolenposten günstig verwirklichen.

Um besonders große Lageveränderungen ausgleichen zu können, können unterschiedliche Konsolen vorgesehen sein, welche Stege mit unterschiedlicher Länge aufweisen. Hierdurch kann bei einem sehr großen Versatz des Trägers aus seiner Soll-Lage eine vergrößerte Konsole eingesetzt werden, welche das Anbauteil schließlich in der gewünschten Position befestigt. Um eine besonders hohe Stabilität der Konsole zu erreichen, kann vorgesehen sein, dass die Stege an ihrem ersten und/oder ihrem zweiten Ende miteinander verbunden sind. Die Verbindung schafft eine besondere Stabilität hinsichtlich mechanischer Beanspruchung der Stege, beispielsweise bei der Verbindung mit dem Anbauteil.

Die Verbindungsstelle zwischen Anbauteil und Konsole bzw. Träger besteht aus einer Aufnahme, die eine Anlagefläche für das Anbauteil bildet. Diese Aufnahme ist insbesondere eine Kopfplatte, welche an dem oder den Stegen befestigt ist.

Besonders vorteilhaft ist es, wenn an jedem Steg eine separate Kopfplatte angeordnet ist. Der Vorteil besteht insbesondere darin, dass bei Stößen der in Ihren Längen begrenzten Anbauteilen ein besserer Ausgleich bei der Ausrichtung erfolgen kann. Die separaten Anlagefläche der unterschiedlichen Kopfplatten können dabei auch unterschiedlich bearbeitet werden. Außerdem ist eine Längendehnung, welche durch Temperatureinflüsse auf die Anbauteile erfolgt, besser kompensierbar, wenn jeweils an einem Steg eine Kopfplatte angeordnet ist.

Weist die Kopfplatte Vorsprünge als Anlagefläche auf, so ist die Bearbeitung der Kopfplatte besonders einfach möglich. Die Anlagefläche ist dabei speziell für eine mechanische Bearbeitung gestaltet.

Als besonders vorteilhaft hat sich erwiesen, dass die Kopfplatte im wesentlichen rechtwinklig zum Steg angeordnet ist. Hierdurch wird eine besonders gute Krafteinleitung ermöglicht. Außerdem ist die Bearbeitung einfach möglich. Auch die Montage der Anbauteile an der Kopfplatte bzw. der Konsole ist hierdurch erleichtert, da die Zugänglichkeit verbessert ist.

Als besonders vorteilhafte Formen für die Verbindung von Kopfplatte mit den Stegen haben sich L-, T- oder U-förmige Gestaltungen herausgestellt. Hierdurch ist eine besonders gute Anordnung der Anbauteile an der Kopfplatte bei gleichzeitiger guter Stabilität oder Ausgleichung von Temperatur-Längenänderungen möglich.

Zu einer besonders stabilen Befestigung der Anbauteile weist der Steg und/oder die Kopfplatte Bohrungen oder Gewinde zur Aufnahme von Befestigungsschrauben und/oder Querkraftbolzen auf. Mit Hilfe dieser Befestigungsschrauben und Querkraftbolzen ist eine zuverlässige Befestigung der Anbauteile an der Konsole ermöglicht.

Um eine spätere Bearbeitung sowohl spanend als auch auftragend zu ermöglichen, ist vorteilhafterweise vorgesehen, dass das Material der Stege und/oder der Kopfplatten spanbares und/oder schweißbares Metall, insbesondere Stahl oder Guss ist. Insbesondere bei einem Gussteil sind besonders funktionsgerechte Gestaltungen der Konsole ermöglicht.

Um eine stabile Verbindung von der Konsole mit dem Träger zu erhalten ist vorteilhafterweise vorgesehen, dass an der Konsole Zuganker angeordnet sind, welche in den Träger einbetoniert sind. Hierdurch ist eine sichere Befestigung der Konsole in dem Träger möglich.

Um die entsprechenden Materialanforderungen besonders günstig umzusetzen, ist in einer besonders vorteilhaften Ausführung vorgesehen, dass die Konsole aus Guss und der Zuganker zumindest teilweise aus Stahl ist, und dass der Zuganker und die Konsole miteinander verschweißt sind. Hierdurch werden die Belastungen, welche von den einzelnen Teilen gefordert werden, besonders günstig in den gewählten Materialien umgesetzt.

Während die einbetonierten Konsolen während der Herstellung des Trägers üblicherweise bereits eingebaut werden müssen, ist in einer alternativen Ausführung vorgesehen, dass die Konsole an dem Träger, insbesondere an einem in dem Träger angeordneten Zuganker angeschraubt ist. Der Zuganker kann dabei in dem Träger einbetoniert sein oder sich in einem Leerrohr befinden und damit jeweils zwei Konsolen beidseitig des Trägers mit mindestens einem Zuganker zu einer Baueinheit zusammenfassen. Hier wird eine besonders einfache Gestaltung erhalten, welche sowohl bei der Montage als auch bei einer evtl. erforderlichen Demontage sehr einfach zu handhaben ist. Als Zuganker eignet sich in diesem Fall insbesondere eine Gewindestange, welche quer durch den Träger von einer Konsole bis zur gegenüberliegenden Konsole reicht.

Sind die Stege an ihrem ersten Ende mit wenigstens einer Fußplatte versehen, so wird eine weitere Stabilität der Konsole erhalten. Die Fußplatte kann dabei entweder außerhalb des Trägers angeordnet sein und sich dabei an dem Träger abstützen. Sie kann aber auch in einer anderen Ausführungsform in den Träger einbetoniert sein und somit eine zusätzliche Verbindung zwischen Konsole und Träger schaffen.

Weist die Fußplatte Bohrungen, insbesondere Zentrierbohrungen zur Befestigung an dem Zuganker auf, so ist ein Anbau und ein Austausch der Konsole auf einfache Weise möglich. Durch die Zentrierbohrungen wird dabei eine exakte Positionierung der Konsole erreicht.

Ist der Abstand zweier Konsolen in Längsrichtung des Fahrweges im wesentlichen ein ganzzahliger Teil der Länge des Anbauteiles, so wird in vorteilhafter Weise eine Konsole am Stoß zwischen zwei Anbauteilen angeordnet. Diese eine Konsole verbindet damit in zuverlässiger Weise die beiden Anbauteile mit dem Träger. Außerdem ist durch die Stegausführung der Konsole eine Längendehnung der Anbauteile, welche durch Temperatureinflüsse nicht vermeidbar ist, einfach zu kompensieren, ohne dass es zu Verspannungen in der Lagerung des Anbauteiles kommt. Besonders vorteilhaft ist es dabei, wenn das erste Anbauteil mit dem ersten Steg bzw. der ersten Kopfplatte und das zweite Anbauteil mit dem zweiten Steg bzw. der zweiten Kopfplatte verbunden ist. Die beiden Stege bzw. Kopfplatten können dann die Wärmedehnungen durch eine relative Bewegung zueinander ausgleichen.

Als Gestaltung für das Anbauteil hat sich ein im Querschnitt im wesentlichen kastenförmiges Bauteil mit integrierter Aufsetzfläche, Seitenführungsfläche und Statorbefestigung erwiesen. Hierdurch ist eine hohe Montagefreundlichkeit beim Anbau der Funktionsteile an die Konsole bzw. den Träger gewährleistet.

Um eine besonders hohe Stabilität bei der Befestigung der Konsole an dem Träger zu erhalten, ist es besonders vorteilhaft, wenn der Träger aus Faserbeton hergestellt ist. Faserbeton bewirkt im vorliegenden Falle, dass auch in den Randbereichen des Trägers, an welchen die Konsole befestigt ist, eine hohe Festigkeit des Betons erhalten wird. Die Konsole muss somit nicht bis in den Bereich der üblichen Bewährung in den Träger eingebracht werden, um eine hohe Stabilität zu erhalten.

Weitere Vorteile und Ausführungen der Erfindung werden in den folgenden Figuren beschrieben. Es zeigt
- **Figur 1**: einen erfindungsgemäßen Fahrweg mit einer Magnetschwebebahn,
- **Figur 2**: einen Träger mit Konsolen,
- **Figur 3**: einen Querschnitt durch einen Träger im Bereich einer Konsole,
- **Figur 4**: eine Draufsicht auf einen Teil eines Trägers im Bereich einer Konsole,
- **Figur 5**: eine Konsole in perspektivischer Ansicht,
- **Figur 6**: eine skizzierte Bearbeitungsvorrichtung für die Konsolen,
- **Figur 7**: eine erfindungsgemäße Befestigung von Anbauteilen an Konsolen
- **Figur 8**: eine Gusskonsole in perspektivischer Ansicht,
- **Figur 9**: die Befestigung einer Konsole mittels Gewindestahl,
- **Figur 10**: die Befestigung einer Konsole in Explosionsdarstellung,
- **Figur 11**: die befestigte Konsole gemäß Figur 10,
- **Figur 12**: perspektivische Ansicht eines Ausschnitts eines Trägers mit befestigten Konsolen,
- **Figur 13+14**: alternative Ausführungen der Konsole,
- **Figur 15**: perspektivische Darstellung einer Verbindung eines Anbauteils mit einer Konsole.

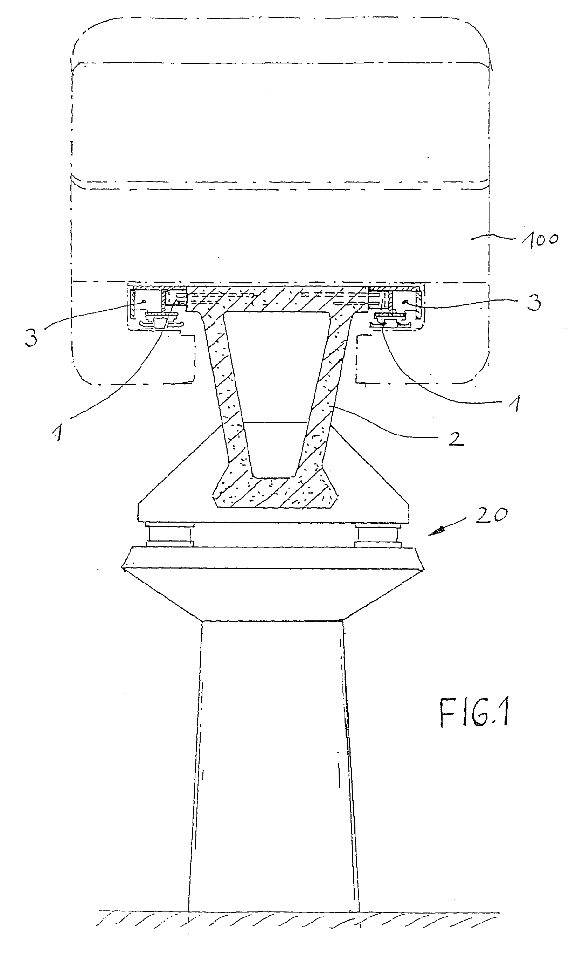

In Figur 1 ist eine Fahrbahn für eine Magnetschwebebahn 100 im Querschnitt dargestellt. Die Magnetschwebebahn 100 umgreift Anbauteile 3, welche seitlich an einem Träger 2 befestigt sind. Die Befestigung erfolgt mittels Konsolen 1, welche in dem Träger 2 einbetoniert sind. Der Träger 2 ist ein Betonfertigteil, welches an der Baustelle auf Stützen 20 befestigt wird. Um den ordnungsgemäßen Betrieb der Magnetschwebebahn 100 zu gewährleisten, ist es wichtig, dass die Anbauteile 3 in einer definierten Position zueinander und in Bezug auf den Träger 2 angeordnet sind. Erst diese relativ exakte Anordnung der Anbauteile 3 macht den Betrieb der Magnetschwebebahn mit extrem hohen Geschwindigkeiten zuverlässig möglich. Die Anbauteile weisen dabei Aufsetzflächen, Seitenführungsflächen und Statorpakete bzw. deren Befestigungen auf, welche eine Führung der Magnetschwebebahn 100 sowie deren Antrieb ermöglichen.

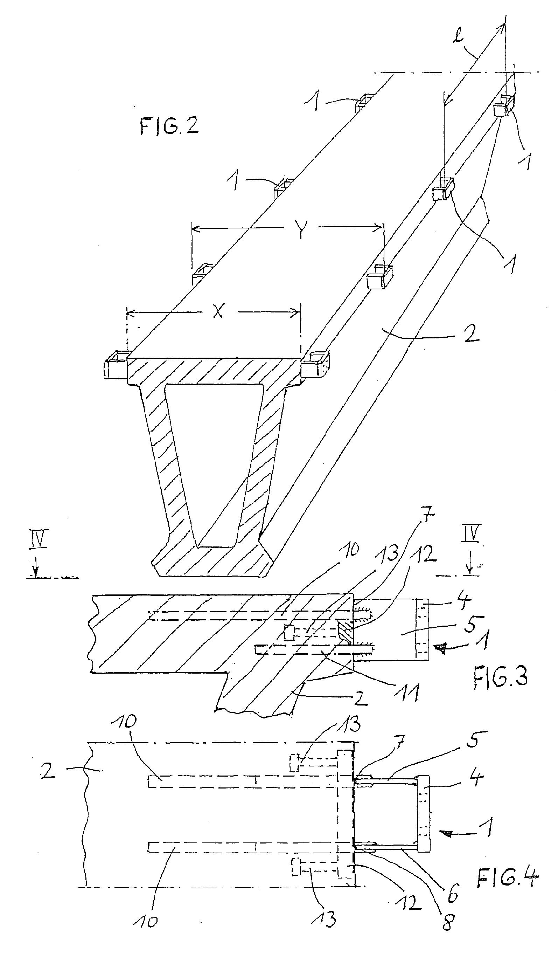

In Figur 2 ist ein Ausschnitt eines Trägers 2 in perspektivischer Ansicht dargestellt. An dem Träger 2 ist eine Vielzahl von Konsolen 1 angeordnet. Der Träger 2 ist als Hohlträger ausgebildet, um eine besonders hohe Stabilität zu erlangen. Hierdurch sind sehr große Spannweiten zu erzielen, wodurch die Herstellkosten eines dementsprechenden Fahrweges verringert werden können. Im Bereich des oberen Gurtes des Trägers 2 sind jeweils an dessen Ende die Konsolen 1 angeordnet. Sie sind in einem Abstand 11 voneinander in Längsrichtung des Trägers beabstandet. Die Länge L ist vorteilhafterweise so gewählt, dass sie ein ganzzahliger Teil der Läge eines Anbauteils 3 ist. Hierdurch wird sichergestellt, dass die Anbauteile, welche wesentlich kürzer als die Träger 2 sind, stets im Bereich einer Konsole gestoßen werden. Hierdurch ist eine exakte Verbindung und Zuordnung ohne zusätzlicher erforderlicher Bauteile möglich. Dies erleichtert den kostengünstigen Bau des Fahrweges, da keine separaten Verbindungsmittel für die Anbauteile erforderlich sind.

Der obere Gurt des Trägers 2 weist eine Breite x auf, welche geringer ist als die Breite y der Außenflächen der Konsolen. An den Außenflächen der Konsolen 1 werden die Anbauteile angebracht. Dementsprechend ist das Maß y wichtig für das geforderte Maß zur Anordnung der Anbauteile. Durch eine Veränderung des Maßes y wird der horizontale Abstand der Anbauteile verändert, der für die genaue Führung des Magnetschwebefahrzeuges sehr wichtig ist.

In Figur 3 ist ein Querschnitt des Trägers 2 im Bereich einer Konsole dargestellt. Die Konsole 1 ist dabei mittels Zuganker 10 und 11 in dem Beton des Trägers 2 eingelassen. Zwischen dem Zuganker 10 und dem Zuganker 11 ist an der Konsole 1 eine Knagge 12 vorgesehen ebenso wie die Zuganker mittels Schweißnähten an den Stirnseiten der Stegbleche 5 des nicht sichtbaren Stegbleches 6 befestigt ist. Die Knagge 12 ist an ihrer den Stegblechen 5, 6 gegenüberliegenden Seite mit zwei Kopfbolzen 13 versehen, die zu ihrer Befestigung im Beton des Trägers 2 dienen. Sie dient dazu, die aus der Belastung der Konsole 1 entstehenden Vertikalkräfte aufzunehmen und kann mit einer aufgeschweißten Zugverzahnung versehen sein. Die Knagge 12 kann auch unmittelbar an den freien Enden 7, 8 der Stegbleche 5, 6 der Konsole angeordnet sein und deren u-förmigen Querschnitt zu einem rechteckigen Querschnitt ergänzen.

Um die Zuganker 10, 11 in ihrem der Konsole 1 benachbarten Bereich gegen Korrosion zu schützen, können die Zuganker 10, 11 in diesem Bereich mit einem Korrosionsschutzmittel beschichtet sein.

Das von dem Träger 2 abgewandte Ende des Stegbleches 5 ist mit einer Kopfplatte 4 versehen. Diese Kopfplatte 4 dient, wie später noch beschrieben wird, der Befestigung der Anbauteile als Verbindungsstelle. Sie ist bei einer Stahlausführung ebenfalls an dem Stegblech 5 angeschweißt.

In Figur 4 ist eine Draufsicht auf einen Träger 2 und eine Konsole 1 gemäß Figur 3 dargestellt. Es ist hier ersichtlich, dass die Stegbleche 5 und 6 voneinander beabstandet sind und jeweils mit ihrem freien Ende 7, 8 mit einem Zugstab 10 bzw. einem darunter liegenden kürzerer Zugstab 11 verbunden sind. Die Stegbleche 5, 6 sorgen dabei für einen entsprechenden Abstand der Kopfplatte 4 von dem Träger 2. Es wird damit u.a. der Vorteil erreicht, dass die Montage der Anbauteile einfach erfolgt, da genügend Freiraum zum beispielsweise Festschrauben der Anbauteile vorhanden ist.

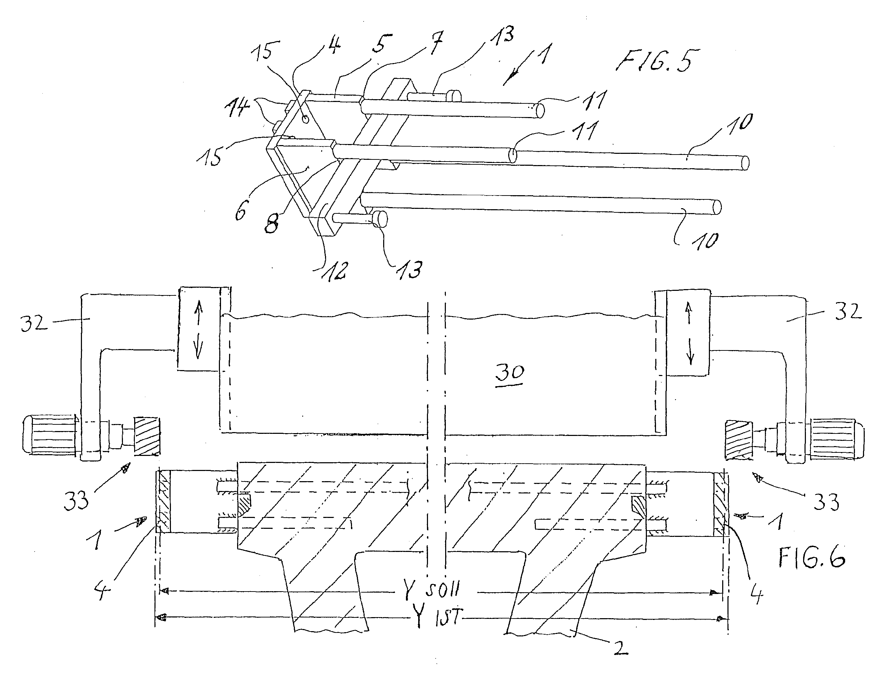

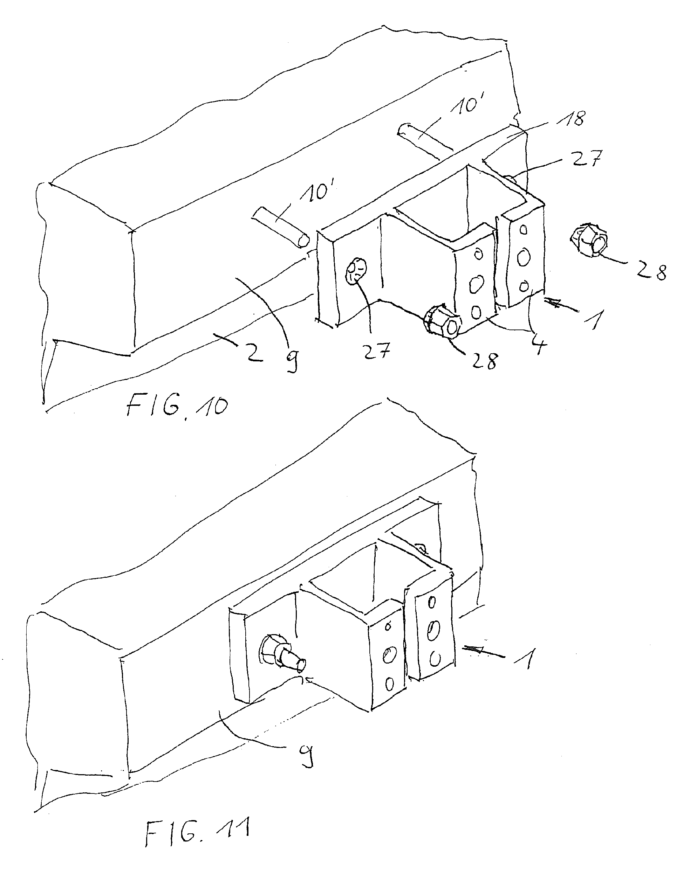

Wie aus Figur 5 ersichtlich ist, weist die Konsole 1 dieses Ausführungsbeispieles einen im wesentlichen u-förmig gestalteten Querschnitt mit der Kopfplatte 4 und zwei im wesentlichen parallel zueinander gerichteten Stegblechen 5, 6 auf, die quer zur Kopfplatte gerichtet sind. Die Kopfplatte 4, die seitlich über die Stegbleche 5, 6 überstehen kann und die Stegbleche 5, 6 sind, beispielsweise mittels entsprechender Schweißnähten, fest miteinander verbunden. Die freien Enden 7, 8 der Stegbleche 5, 6 liegen an der Einbaulage der Konsole 1 an der Seitenwand 9 (vergl. Figur 9) des Trägers 2 an.

Im Bereich der freien Enden 7, 8 sind an den Stegblechen 5, 6 als Befestigungsmittel für die jeweilige Konsole 1 dienende Zuganker 10, 11 vorgesehen, die mittels Schweißnähten an den Stegblechen 5, 6 befestigt sind. Die Zuganker 10, 11 können, wie im Ausführungsbeispiel gezeigt, an den Stirnseiten der Stegbleche 5, 6 oder aber an deren Seitenflächen befestigt sein. Die in der Einbaulage der Konsole 1 oberen Zuganker 10 sind länger ausgebildet als die in der Einbaulage unteren Zuganker 11. Die Zuganker 10, 11 dienen dazu die aus der Belastung der Konsole 1 entstehenden axiale Kräfte aufzunehmen.

Beim gezeigten Ausführungsbeispiel sind die Zuganker 10, 11 mit der Konsole 1 fest verbunden. Die Zuganker 10, 11 können aber auch als separate Elemente ausgebildet sein, wobei sie durch den gesamten Betonquerschnitt verlaufen. Im Fall einer Bauweise mit separaten Zugankern können die Konsolen 1 auch durch externe Vorspannung an den Betonträger 2 angespannt werden (siehe Figur 9 - 16).

Die Knagge 12 und die Kopfbolzen 13 sind ebenfalls mit de Stegblechen 5, 6 verbunden, um entstehende Vertikalkräfte aufzunehmen.

Der erfindungsgemäße modulare Aufbau gestattet es auch die Konsolen 1 unabhängig von der Schalung für den Träger 2 zunächst an einer separaten Hilfskonstruktion zu befestigen, wobei die Konsolen in Langlöcher der Hilfskonstruktionen x-, y- und z-Richtung variabel eingemessen und positioniert werden können. Hierdurch ist gewährleistet, dass die für die Tragelemente 3 benötigte Raumkurve unabhängig von der Form und Genauigkeit des Trägers 2 abgebildet werden kann.

Die für die Lage der Tragelemente 3 relativ engen Toleranzen können durch mechanische Bearbeitung beispielsweise von Vorsprüngen 14 der Kopfplatte 4 und von Bohrungen 15 an den Konsolen 1 hergestellt werden.

In Figur 6 ist skizziert die Bearbeitung der Konsolen 1 dargestellt. Hierzu ist ein Fahrzeug 30 oberhalb des Trägers 2 beispielsweise in nicht dargestellten Schienen geführt. Das Fahrzeug 30 vermisst den Abstand der Außenflächen der Kopfplatten 4 der Konsolen 1 und stellt dabei einen Wert y_{Ist} fest. Durch ein Verfahren eines Fräsers 33, welcher an einem Arm 32 des Fahrzeuges 30 angeordnet ist, werden die Koordinaten für einen y_{Soll}-Wert, welcher an den Konsolen 1 anliegen soll, eingestellt. Anschließend wird durch ein Absenken des Armes 2 in dem Bereich der Konsolen 1 die Kopfplatte 4 soweit abgearbeitet, bis das Maß y_{Soll} erreicht ist. Zum Vermessen des Abstandes y_{Soll} bzw. -_{Ist} wird das Fahrzeug 30 auf bestimmte Referenzpunkte, Linien oder Flächen eingestellt. Hierdurch wird beispielsweise erreicht, dass zur Mittelachse des Trägers 2 die Kopfplatten 4 symmetrisch nach dem Abarbeiten angeordnet sind und nicht aus der Mittellinie laufen.

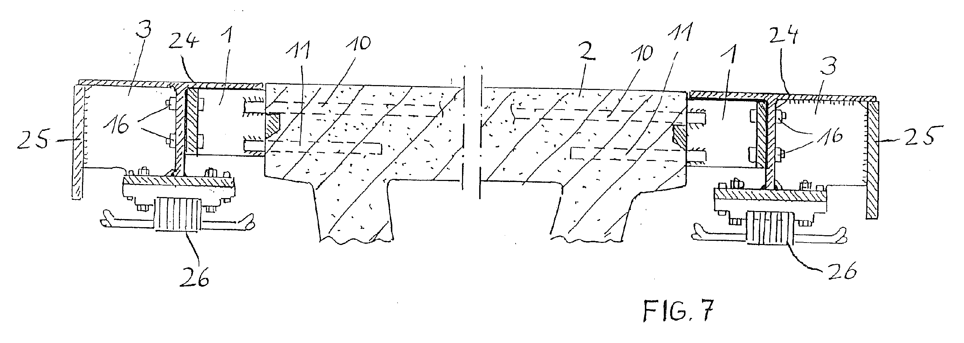

Figur 7 zeigt den Träger 2 mit jeweils einer Konsole 1 und daran angeordneten Anbauteilen 3. Die Konsole 1 ist mit den Zugankern 10 und 11 in dem Träger 2 verankert. Die Konsole 3 weist jeweils eine obere Absetzfläche 24, eine Seitenführungsfläche 25 und ein Statorpaket 26 auf. Das Statorpaket 26 ist an einer entsprechenden Befestigungsfläche des Anbauteils 3 angeordnet. Das Anbauteil 3 ist im wesentlichen kastenförmig ausgebildet, wodurch eine sehr kompakte und stabile Bauweise erzielt wird. Das Anbauteil 3 ist mittels Schrauben 16 an der Konsole 1 befestigt. Im Falle einer Beschädigung des Anbauteils 3 oder des Trägers 2 können Anbauteil 3 und Träger 2 voneinander mittels dieser Schraubverbindung entfernt werden.

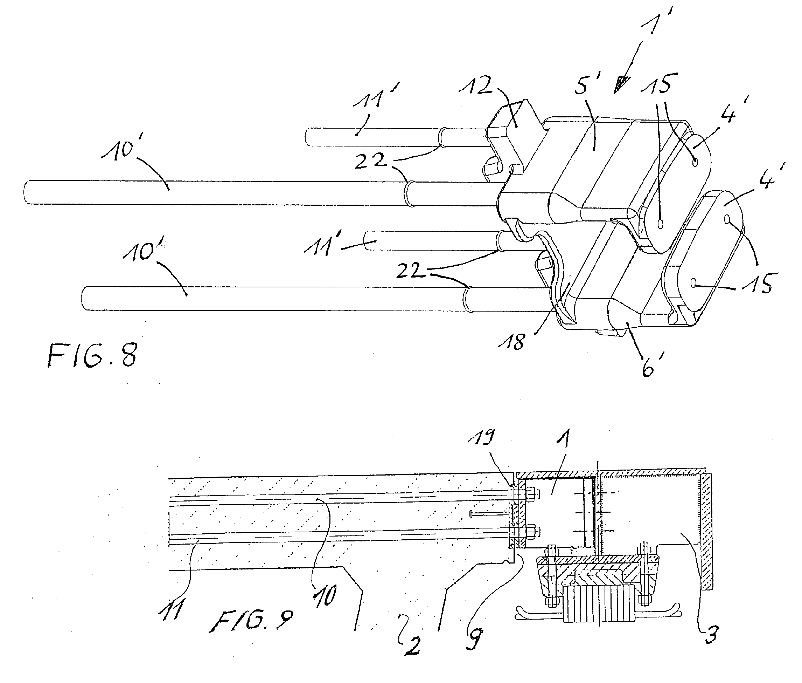

Figur 8 zeigt ein anderes Ausführungsbeispiel einer Konsole 1'. Die Konsole 1' ist im wesentlichen ein Gussteil, beispielsweise Sveroguß ggg 50. Als Gussteil besteht der wesentliche Vorteil, dass die Formgebung je nach den Funktionserfordernissen gewählt werden kann. So kann insbesondere in Abhängigkeit der auftretenden Kräfte unterschiedliche Wanddicke gewählt werden. Außerdem kann in den Bereichen, in welchen Material abgetragen oder aufgetragen werden soll, eine entsprechende Wanddicke vorgesehen sein. Die Konsole 1' weist Stege 5' und 6' auf, welche insbesondere an ihren Fußpunkten eine stärkere Wandstärke haben als im Kopfbereich. Die Fußpunkte sind mit einer Fußplatte 18 verbunden. Die Kopfplatte 4' ist zweigeteilt. An jedem Steg 5', 6' ist eine Kopfplatte 4' angeordnet, ohne die Stege 5', 6' zu verbinden. Die Festigkeit der Konsole wird durch die Fußplatte 18 sowie eine ebenfalls vorgesehene Knagge 12 erhalten. Die Kopfplatte 4' weist Bohrungen 15 auf, an welchen das Anbauteil angeschraubt werden soll. Die Kopfplatte 4' ist so ausgebildet, dass sie abgefräst oder durch Schweißen Material aufgetragen werden kann. Der Materialauftrag kann auch durch Einlegen von Scheiben oder Platten bzw. Verschweißen dieser Teile mit der Kopfplatte 4' erfolgen. Die offene Gestaltung der Kopfplatte 4' weist wesentliche Vorteile am Stoß von Anbauteilen 3. Hierbei wird beispielsweise die Kopfplatte 4', welche mit dem Steg 5' verbunden ist, mit dem ersten Anbauteil verbunden, während die Kopfplatte 4' des Stegs 6' mit dem zweiten Anbauteil verbunden wird. Hierdurch sind durch Temperaturschwankungen auftretende Längenänderungen der Anbauteile problemlos ausgleichbar.

Das Gussteil der Konsole 1' weist Fortsätze auf, welche mit Zugankern 10' und 11' verbunden sind. Die Verbindung erfolgt beispielsweise mittels Schweißen, wodurch eine Schweißnaht 22 entsteht. Hierdurch wird einerseits das Gießen der Konsole 1' erleichtert. Andererseits wird die Zugbeanspruchung der Zugstäbe 10' und 11' besser mit Stahlstäben erzielt. Durch dieses Verbundsystem wird auf die einzelnen Erfordernisse der Bauteilbeanspruchungen optimal eingegangen. Der beim Verschweißen der Zugstäbe 10' und 11' mit den Fortsätzen der Konsole 1' entstehenden Wulste der Schweißnaht 22 werden vorteilhafterweise nicht abgearbeitet und sorgen somit innerhalb des Betons gleichzeitig für einen besseren Formschluss der Konsole 1' in dem Träger 2.

Bei dem Ausführungsbeispiel der Figur 9 ist die Konsole 1 mittels durch den oberen Gurt des Trägers 2 durchgehenden Zugstäben 10 und 11 befestigt.

Die Zugstäbe 10 und 11 sind Gewindestäbe aus Stahl, welche die Konsole 1 sowie die ihr korrespondierende, dem Träger 2 gegenüberliegende Konsole 1 miteinander verbinden. In dem Träger 2 können hierfür nicht dargestellte Leerrohre einbetoniert sein, durch welche die Gewindestäbe 10 und 11 hindurchgesteckt und anschließend die Konsolen 1 miteinander verschraubt werden. Zum Abstützen der Konsolen 1 können Anschlagplatten 19 an der Seitenwand 9 des Trägers 2 einbetoniert sein, um ein gutes Abstützen der Konsole 1 an dem Träger 2 zu gewährleisten. Zum Einstellen können zwischen der Anschlagplatte 19 und der Konsole 1 Distanzstücke eingelegt werden.

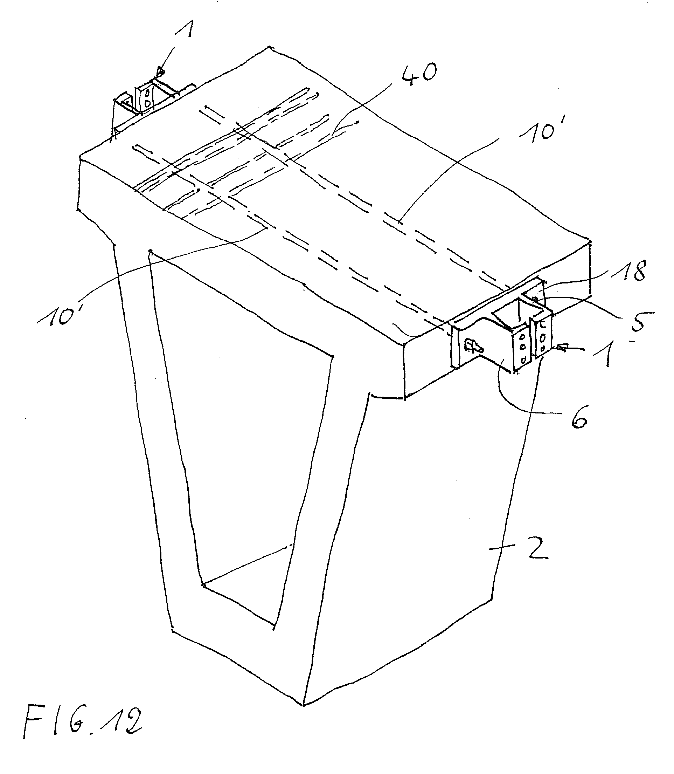

Figur 10 zeigt einen Ausschnitt eines Trägers 2. Aus der Seitenwand 9 stehen Zuganker 10' hervor. Auf die Zuganker 10' wird die Konsole 1 mit ihrer Fußplatte 18 aufgesteckt. In der Fußplatte 18 sind Zentrierbohrungen 27 angeordnet, welche mit Zentriermuttern 28 korrespondieren. In montiertem Zustand wird, gemäß Figur 11, die Konsole 1 an die Seitenwand 9 fest angeschraubt. Durch die Zentrierung der Mutter 28 in der Bohrung 27 wird eine feste Verbindung der Konsole 1 mit dem Träger 2 geschaffen.

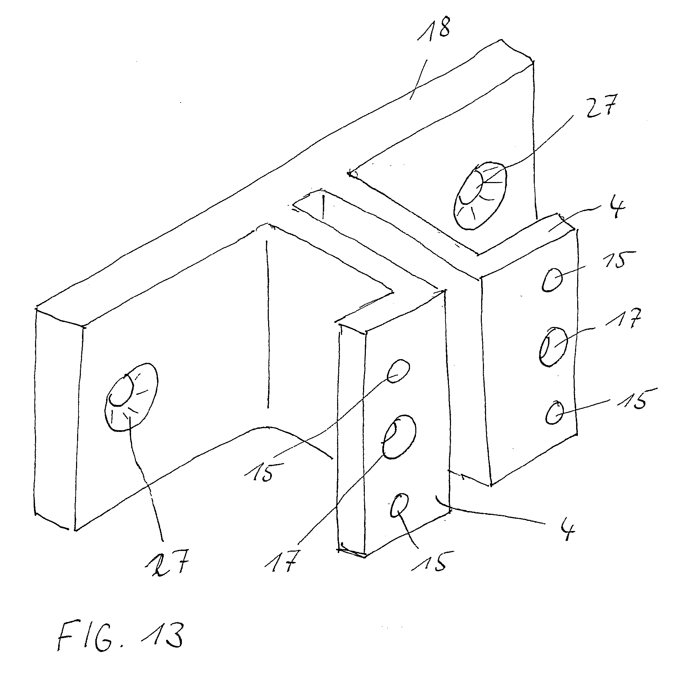

In einem Ausführungsbeispiel gemäß Figur 12 ist an einem Träger 2 jeweils eine Konsole 1 beidseitig des oberen Gurtes des Trägers 2 angeordnet. Die Zugstäbe 10' verbinden die beiden Konsolen 1 miteinander. Die Konsolen 1 werden an den Zugstäben 10' befestigt, in dem eine Mutter auf den als Gewindestab ausgebildeten Zugstab 10' aufgeschraubt wird. Die Konsolen 1 werden somit an den oberen Gurt des Trägers 2 angepresst und miteinander verspannt. Die Konsole 1 weist dabei eine Fußplatte 18 auf, welche die Stege 5, 6 miteinander verbindet und außerdem Bohrungen beinhaltet zur Aufnahme der Zuganker 10' und der entsprechenden Mutter zum Verschrauben der Konsole 1.

Die Zuganker 10' verlaufen vorzugsweise zwischen Ebenen, in welchen Bewährungseisen 40 verlegt sind. Hierdurch wird eine besonders hohe Festigkeit erzielt. Alternativ kann hierfür auch Faserbeton verwendet werden, um auch in Randbereichen eine hohe Festigkeit des Trägers 2 zu erlangen.

In Figur 13 ist ein weiteres Ausführungsbeispiel einer Konsole 1 dargestellt. Die Ausführung entspricht weitgehend der Konsole 1 gemäß Figur 12. Die Stege 5, 6 sind jedoch näher aneinander angeordnet. Die Kopfplatten 4 sind voneinander weggerichtet. Diese Ausführung hat u.a. den Vorteil, dass sie eine leichtere Zugänglichkeit zu den Befestigungselementen der Anbauteile 3 haben. Die Schrauben, welche durch die Bohrungen 15 hindurchgeführt werden, sind von Außen leichter zugänglich und somit auch mit Werkzeugmaschinen leichter zu bedienen.

In der Fußplatte 18 sind Zentrierbohrungen 27 angeordnet. Durch das Zusammenwirken mit Zentriermuttern zum Befestigen an den Zentrierstäben 10' gemäß Figur 12 wird somit eine sehr exakte Positionierung der Konsole 1 an dem Träger 2 erzielt. Darüber hinaus wird eine hohe Festigkeit der Schraubverbindung erreicht.

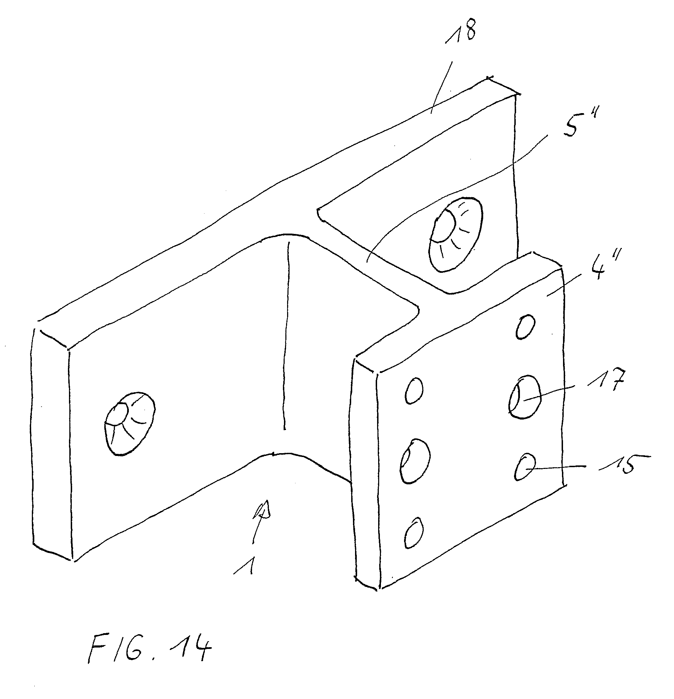

In Figur 14 ist ein weiteres Ausführungsbeispiel einer Konsole 1 dargestellt. Hierbei ist lediglich ein einziger Steg 5" an der Fußplatte 18 befestigt. An dem Steg 5" ist an seinem anderen Ende eine einzige Kopfplatte 4" angeordnet, welche Bohrungen 15 und 17 für ein Anbauteil aufweist. In manchen Ausführungen ist diese Gestaltung der Konsole 1 ausreichend, auch wenn im allgemeinen die Ausführung mit zwei Stegen und zwei Kopfplatten als derzeit vorteilhafteste Ausführung betrachtet wird.

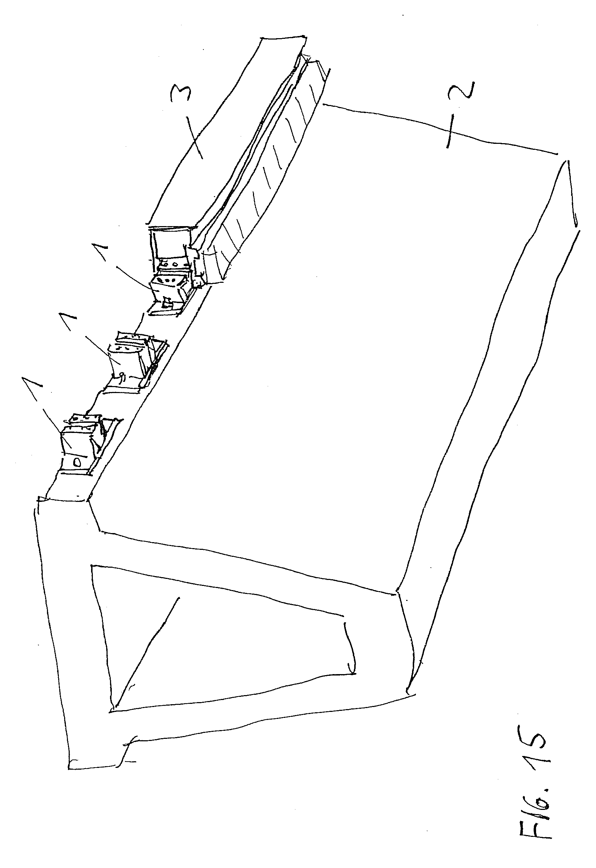

In Figur 15 ist in perspektivischer Ansicht ein Ausschnitt eines Trägers 2 mit mehreren Konsolen 1 dargestellt. Ein Anbauteil 3 ist an Konsolen befestigt. Aus dieser Darstellung ist ersichtlich, dass das Ende des Anbauteils 3 an einer Kopfplatte einer Konsole 1 endet. Das noch nicht angebaute folgende Anbauteil wird auf die zweite Kopfplatte der Konsole 1 aufgeschraubt. Durch die geschlitzte Bauweise der Kopfplatte 4 wird somit eine Längenausdehnung der Anbauteile in begrenztem Maße zugelassen.

Die vorliegende Erfindung ist nicht auf die dargestellten Ausführungsbeispiele beschränkt. Insbesondere Kombinationen der einzelnen Merkmale sind jederzeit ohne den Rahmen der Erfindung zu verlassen möglich.

## Patentansprüche

1. Fahrweg für ein spurgebundenes Fahrzeug, insbesondere eine Magnetschwebebahn, mit Konsolen (1) zur Verbindung eines Trägers (2) mit wenigstens einem Anbauteil (3) zum Führen des Fahrzeuges, **dadurch gekennzeichnet, dass** die Konsolen (1) mit dem Träger (2) verbunden sind und eine im wesentlichen längs des Trägers (2) sich erstreckende Aufnahme für die Befestigung des Anbauteiles (3) aufweisen, und dass jeweils zwei, beidseitig des Trägers (2) angeordnete, einander gegenüberliegende Konsolen (1) mit mindestens einem Zuganker (10,11) zu einer Baueinheit zusammengefasst sind.

2. Fahrweg nach Anspruch 1, **dadurch gekennzeichnet, dass** die Konsolen (1) wenigstens einen Steg (5,6) aufweisen, der an seinem ersten Ende mit dem Träger (2) verbunden ist und an seinem zweiten Ende eine im wesentlichen längs des Trägers (2) sich erstreckende Aufnahme aufweist.

3. Fahrweg nach Anspruch 1 oder 2, **dadurch gekennzeichnet, dass** die Stege (5,6) an ihrem ersten und/oder ihrem zweiten Ende miteinander verbunden sind.

4. Fahrweg nach einem der Ansprüche 1 bis 3, **dadurch gekennzeichnet, dass** die Konsole (1) über den in Längsrichtung des Trägers (2) verlaufenden Rand des Trägers (2) hinausragt, sodass ein Zwischenraum zwischen Träger (2) und Anbauteil (3) entsteht.

5. Fahrweg nach einem der Ansprüche 1 bis 4, **dadurch gekennzeichnet, dass** der Zuganker (10,11) über die Aufnahmen verspannt ist.

6. Fahrweg nach einem der Ansprüche 1 bis 5, **dadurch gekennzeichnet, dass** die Aufnahme eine Anlagefläche für das Anbauteil (3), insbesondere eine Kopfplatte (4) ist.

7. Fahrweg nach Anspruch 6, **dadurch gekennzeichnet, dass** die Kopfplatte (4) Vorsprünge (14) als Anlagefläche aufweist.

8. Fahrweg nach Anspruch 6 oder 7, **dadurch gekennzeichnet, dass** die Kopfplatte (4) im wesentlichen rechtwinkelig zur Konsole (1) angeordnet ist.

9. Fahrweg nach einem der Ansprüche 6 bis 8, **dadurch gekennzeichnet, dass** die Kopfplatte (4) Bohrungen oder Gewinde zur Aufnahme von Befestigungsschrauben und/oder Querkraftbolzen für die Anbauteile (3) aufweist.

10. Fahrweg nach einem der Ansprüche 6 bis 9, **dadurch gekennzeichnet, dass** das Material der Konsole und/oder der Kopfplatte (4) spanend und/oder schweißbares Metall, insbesondere Stahl oder Guss ist.

11. Fahrweg nach einem der Ansprüche 1 bis 10, **dadurch gekennzeichnet, dass** die Konsole (1) in den Träger (2) mit an der Konsole (1) angeordneten Zugankern (10,11) einbetoniert ist.

12. Fahrweg nach einem der Ansprüche 1 bis 11, **dadurch gekennzeichnet, dass** die Konsole (1) aus Guss und der Zuganker (10,11) zumindest teilweise aus Stahl ist, und dass der Zuganker (10,11) und die Konsole (1) miteinander verschweißt sind.

13. Fahrweg nach einem der Ansprüche 1 bis 12, **dadurch gekennzeichnet, dass** die Konsole (1) an dem Träger (2), insbesondere an einem in dem Träger (2) angeordneten Zuganker (10,11) angeschraubt ist.

14. Fahrweg nach einem der Ansprüche 1 bis 13, **dadurch gekennzeichnet, dass** der Zuganker (10,11) eine Gewindestange ist.

15. Fahrweg nach einem der Ansprüche 1 bis 14, **dadurch gekennzeichnet, dass** der Abstand zweier Konsolen (1) in Längsrichtung des Fahrweges im wesentlichen ein ganzzahliger Teil der Länge des Anbauteiles (3) ist.
